Europäisches Patentamt

(19) European Patent Office

Office européen des brevets

(11) Veröffentlichungsnummer: **0 000 939**
**A1**

(12) # EUROPÄISCHE PATENTANMELDUNG

(21) Anmeldenummer: **78100724.0**

(22) Anmeldetag: **23.08.78**

(51) Int. Cl.²: **F 16 B 5/06**

---

(30) Priorität: **25.08.77 DE 7726317 U**

(43) Veröffentlichungstag der Anmeldung: **07.03.79**
**Patentblatt 79/5**

(84) Benannte Vertragsstaaten: **BE CH DE FR GB LU NL SE**

(71) Anmelder: **Herrmann, Douglas, Teutonenstrasse 51, D-8500 Nürnberg (DE)**

(72) Erfinder: **Herrmann, Douglas, Teutonenstrasse 51, D-8500 Nürnberg (DE)**

(74) Vertreter: **Eitel, Alfred, Dr. et al, Königstrasse 1, D-8500 Nürnberg (DE)**

---

(54) **Flächenelement.**

(57) Flächenelement, insbesondere als Raumteiler, als Lampenabdeckung, abgehängte Decke, Bilderrahmen od. dgl., bestehend aus einer Mehrzahl von vieleckigen Rahmen (1), von denen je zwei entlang eines parallelen Schenkels (3) einander anliegen, wobei die einander anliegenden Schenkel (3) durch wenigstens ein Klemmelement (4) miteinander verbunden sind.

EP 0 000 939 A1

ACTORUM AG

**Patentanwälte**

Dr. Max Schneider † (1977)
Dr. Alfred Eitel Dipl.-Ing.
Ernst Czowalla Dipl.-Ing. Dipl.-Ldw.
Peter Matschkur Dipl.-Phys.

0000939

85 Nürnberg 106, den 22. Aug. 1978
Königstraße 1 (Museumsbrücke)
Fernsprech-Sammel-Nr. 20 39 31

P Parkhaus Katharinenhof
Parkhaus Adlerstraße

diess.Nr.: 29 354/Ma-R1.


H e r r m a n n  Douglas, Teutonenstr. 51, 85oo Nürnberg
------------------------------------------------------------------


"Flächenelement"


Die Erfindung betrifft ein Flächenelement, bestehend aus einer
Mehrzahl von vieleckigen Rahmen, von denen je zwei entlang eines
parallelen Schenkels einander anliegen.


Für Flächenelemente dieser Art bestehen vielerlei Verwendungsmöglichkeiten. Sie können als Raumteiler, als Lampenabdeckungen, als
abgehängte Raumdecken aber auch als gegliederte Bilderrahmen oder
als Einrahmungen für graphische oder tabellarische Darstellungen
verwendet werden.


Der Erfindung liegt die Aufgabe zugrunde, ein Flächenelement der
eingangs genannten Art zu schaffen, das von dem jeweiligen Benutzer beliebig strukturiert, zusammengesetzt und abgeändert werden kann, so daß es für die verschiedensten Bereiche mit den unterschiedlichsten Anforderungen Verwendung finden, aber auch in
gleichen Anwendungsgebieten wechselnden Anforderungen ohne weiteres

Deutsche Bank A. G. Nürnberg Nr. 330 668, BLZ 760 700 12 - Hypobank Nürnberg Nr. 1 660 274 601, BLZ 760 202 14
Postscheck-Konto: Amt Nürnberg Nr. 363 05-855 - Drahtanschrift: Norispatent

angepaßt werden kann.

Zur Lösung dieser Aufgabe schlägt die Erfindung vor, ein Flächenelement der eingangs bezeichneten Art derart auszugestalten, daß die aneinander anliegenden Schenkel durch wenigstens je ein Klemmelement miteinander verbunden sind. Damit wird es möglich, beliebige Strukturen eines solchen Flächenelementes im allgemeinen ohne Hilfe eines Werkzeuges herzustellen, zu vergrößern, zu verkleinern oder auch nach Bedarf umzugruppieren. Zum Beispiel kann ein Benutzer aus vieleckigen Rahmen, die als Bilderrahmen ausgebildet sind, ein Flächenelement bilden, das die Bilder etwa seiner Angehörigen aufnimmt, wobei sich dieses Flächenelement je nach Vergrößerung der Familie weiter ergänzen läßt. Desgleichen kann z.B. ein Organisationsschema einer Behörde oder eines Betriebes dargestellt werden, indem die einzelnen Abteilungen durch einen Rahmen repräsentiert sind, und in dem die Über- bzw. Unterordnungen durch die geometrische Anordnung der einzelnen Rahmen zueinander dargestellt ist. Änderungen sowohl in der Struktur, als auch in der Zahl der einzelnen Elemente lassen sich leicht nachvollziehen.

Die einzelnen Rahmen können dabei weitgehend beliebige Formen aufweisen. Besonders günstig kann es sein, daß sie untereinander den gleichen, vorzugsweise regelmäßigen Grundriß aufweisen. Zum Beispiel lassen sich gleichseitige Dreiecke, Quadrate und regelmäßige Sechsecke zu allseits geschlossenen Flächenelementen zusammensetzen, während bei regelmäßigen Achtecken Zwischenräume verbleiben. Es ist natürlich auch möglich, unterschiedliche Rahmen miteinander zu verbinden, z.B.Achtecke und Vierecke, oder
auch Vierecke unterschiedlicher Form und Größe.

Als besonders vorteilhaft hat sich erwiesen, daß die Klemmelemente aus einer etwa U-förmigen Feder bestehen, die zwischen
ihren beiden U-Armen die einander anliegenden Schenkel aufnimmt,
wobei die U-Arme den Schenkeln kraftschlüssig anliegen. Mit dieser Art der Befestigung ist es möglich, die einzelnen Rahmen
schnell und einfach miteinander zu verbinden, darüber hinaus
können die Federn auf der dem Betrachter abgewendeten Seite
angebracht werden, so daß die Klemmelemente nicht sichtbar sind.
Die Feder selbst kann z.B. aus Bandstahl bestehen, oder aber
auch aus Rundstahl, wobei in diesem Fall für ein Schenkelpaar
gegebenenfalls zwei Federn verwendet werden.

In weiterer Ausgestaltung der Erfindung können die Klemmelemente aus einer Lasche bestehen, die mitt-els einer Druckknopf-
bzw. Steckzapfen-Steckloch-Befestigung mit den aneinander anliegenden Schenkeln verbunden ist. Selbstverständlich ist auch
eine Kombination möglich, bei der die Lasche auf der einen Seite
einen Druckknopf und auf der anderen Seite eine Steckzapfen-
Steckloch-Befestigung aufweist.

Da die erfindungsgemäß zusammengesetzten Flächenelemente sowohl in vertikaler, als auch in horizontaler oder jeder
Zwischenstellung verwendbar sein sollen, sieht die Erfindung weiterhin vor, daß wenigsgens ein Teil der Klemmelemente Verbindungsglieder zur Befestigung an einem Hängeanker o.dgl. aufweist. Damit läßt sich das zusammengesetzte Flächenelement
rasch und sicher an der gewünschten Stelle befestigen.

Es liegt im Rahmen der Erfindung, daß die Rahmen eine unterschiedliche Höhe aufweisen und mit ihrer den Klemmelementen zugekehrten Grundfläche in einer gemeinsamen Ebene liegen. Mit
dieser Ausgestaltung wird es ermöglicht, der den Klemmelementen
abgekehrten Fläche eine Strukturierung zu verleihen. Dies kann
z.B. bei abgehängten Raumdecken aus Schallschutzgründen besonders vorteilhaft sein. Darüber hinaus kann die Strukturierung
natürlich auch als gestaltendes Element benutzt werden.

Weitere Merkmale, Einzelheiten und Vorzüge der Erfindung ergeben sich aus der folgenden Beschreibung bevorzugter Ausführungsformen sowie an Hand der Zeichnung. Hierbei zeigen:

Fig. 1 eine teilweise abgebrochene Ansicht eines aus drei
       gleichschenkligen sechseckigen Rahmen bestehenden
       Flächenelementes;

Fig. 2 einen abgebrochenen Schnitt durch fünf aneinandergefügte
       Rahmen unterschiedlicher Höhe;

Fig. 3 ein Flächenelement aus rechteckigen Rahmen;

Fig. 4 ein Flächenelement aus fünfeckigen und verschiedenartigen sechseckigen Rahmen;

Fig. 5 eine abgebrochene Darstellung der Befestigung zweier
       Rahmen und

Fig. 6 einen Schnitt durch eine andere Befestigungsart.

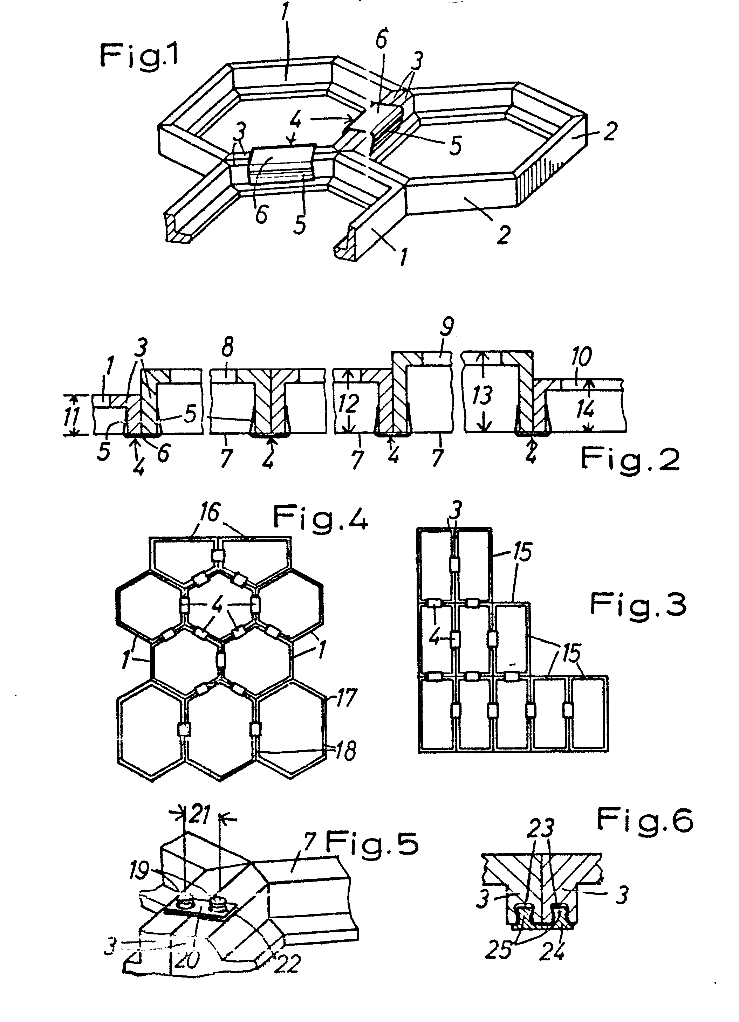

Das Flächenelement nach der Fig. 1 besteht aus drei gleichen
Rahmen 1, deren Grundriß, da jeder aus sechs gleichen Rahmenschenkeln 2 besteht, ein regelmäßiges Sechseck bildet. Der
einzelne Rahmenschenkel 2 weist einen L-förmigen Querschnitt
auf. Jeder Rahmen 1 liegt jedem benachbarten Rahmen 1 entlang
jeweils eines Rahmenschenkels 3 an. Diese parallel einander
anliegenden Rahmenschenkel 3 sind mit je einer Feder 4 miteinander verbunden. Diese Feder weist, wie insbesondere aus
Fig. 2 hervorgeht, einen U-förmigen Querschnitt auf, wobei die
U-Arme 5 den Rahmenschenkeln 3 kraftschlüssig anliegen,während
der Steg 6 der Feder 4 der Grundfläche 7 der Rahmenelemente 1,
8, 9 bzw. 1o anliegt.

Das Flächenelement gemäß Fig. 2 besteht aus fünf gleichartigen
Rahmen 1, 8, 9 und 1o, wobei die einzelnen Rahmen jedoch eine
unterschiedliche Höhe aufweisen. So weist der Rahmen 1 an der
linken Seite der Fig. 2 die Höhe 11 auf, die beiden Rahmen 8 weisen die Höhe 12 auf, während die Rahmen 9 und 1o die Höhe 13
bzw. 14 aufweisen. Die den Federn 4 zugekehrten Grundflächen 7
aller Rahmen 1, 8, 9 und 1o liegen in einer gemeinsamen Ebene.

Bei der Anordnung nach Fig. 3 besteht das von seiner Rückseite
wiedergegebene Flächenelement aus beispielsweise zehn Rahmen 15
mit rechteckigem Grundriß, wobei die obere Reihe zwei Rahmen 15,
die mittlere Reihe drei und die untere Reihe fünf Rahmen 15
enthält. Die aneinander anliegenden parallelen Schenkel 3 der
Rahmen 15 sind ebenfalls mit Hilfe eines Klemmelementes,z.B.
einer Feder 4, miteinander verbunden. Eine solche Anordnung wie
in Fig. 3 könnte z.B. als Bilderrahmen für eine Familie gedacht
sein, wobei in den Rahmen der oberen Reihe die Bilder der Eltern,
in der mittleren Reihe die der Kinder und in der unteren Reihe
die der Enkel eingesetzt sein könnten.

In Fig. 4 ist ein Flächenelement dargestellt, das bei diesem
Beispiel aus Rahmen unterschiedlicher Größe und Form zusammengesetzt ist. Es besteht aus zwei fünfeckigen Rahmen 16, fünf
sechseckigen Rahmen 1 sowie drei ebenfalls sechseckigen Rahmen 17,
bei denen jedoch die beiden senkrecht verlaufenden Rahmenschenkel 18 länger sind als die übrigen Rahmenschenkel 2.

Eine weitere Befestigungsmöglichkeit ist aus Fig. 5 ersichtlich,
bei der die einzelnen Rahmenschenkel 3 auf ihrer Grundfläche 7
je einen Zapfen 19 aufweisen. Auf je zwei benachbarte Zapfen 19 ist eine Lasche 2o aufgesteckt, die in einem dem Abstand 21 der beiden Zapfen 19 entsprechenden Abstand zwei Löcher 22 aufweist. Die umgekehrte Befestigungsart ist in Fig. 6 gezeigt, bei der die einander anliegenden Rahmenschenkel 3 je ein Steckloch 23 aufweisen, in das je ein an einer Lasche 24 angeformter Steckzapfen 25 eingreift. Zur besseren Haltbarkeit der jeweiligen Verbindung sind die Zapfen 19 und die Steckzapfen 25 an ihrem Kopf jeweils etwas verbreitert.

Natürlich ist es auch möglich, die Lasche und die Rahmenschenkel derart auszubilden, daß die Lasche an ihrem einen Ende ein Loch 22 zur Aufnahme eines an dem Rahmenschenkel befindlichenZapfens 19 und an ihrem anderen Ende einen Steckzapfen 25 zum Einsetzen in ein in dem Rahmenschenkel 3 angeordneten Steckloch aufweist.

Die Rahmen könnenaus Holz, Kunststoff oder Metall bestehen. Für die Klemmelemente kann außer Metall auch ein hochwertiger Kunststoff in Betracht kommen. Gegebenenfalls können zum Zweck einer dauerhaften Verbindung zwischen den Rahmen die Klemmelemente zusätzlich durch eine Verschraubung der aneinander anliegenden Schenkel unterstützt werden.

## Patentansprüche :

1. Flächenelement, bestehend aus einer Mehrzahl von vieleckigen Rahmen, von denen je zwei entlang eines parallelen Schenkels einander anliegen, dadurch gekennzeichnet, daß die aneinander anliegenden Schenkel (3) durch wenigstens je ein Klemmelement miteinander verbunden sind.

2. Flächenelement nach Anspruch 1, dadurch gekennzeichnet, daß die Rahmen (1) untereinander den gleichen, vorzugsweise regelmäßigen Grundriß aufweisen.

3. Flächenelement nach Anspruch 1 oder 2, dadurch gekennzeichnet, daß die Klemmelemente aus einer etwa U-frmigen Feder (4) bestehen, die zwischen ihren beiden U-Armen (5) die aneinander anliegenden Schenkel (3) aufnimmt, wobei die U-Arme (5) den Schenkeln (3) kraftschlüssig anliegen.

4. Flächenelement nach Anspruch 1 oder 2, dadurch gekennzeichnet, daß die Klemmelemente aus einer Lasche (2o, 24) bestehen, die mittels einer Druckknopf- bzw. Steckzapfen-Steckloch-Befestigung mit den aneinander anliegenden Schenkeln (3) verbunden ist.

0000939

5. Flächenelement nach einem der Ansprüche 1 bis 4, dadurch gekennzeichnet, daß wenigstens ein Teil der Klemmelemente Verbindungsglieder zur Befestigung an einem Hängeanker o.dgl. aufweist.

6. Flächenelement nach einem der Ansprüche 1 bis 5, dadurch gekennzeichnet, daß die Rahmen (1, 8, 9, 1o) eine unterschiedliche Höhe aufweisen und mit ihrer den Klemmelementen zugekehrten Grundfläche 7 in einer gemeinsamen Ebene liegen.

0000939

Fig.1

Fig.2

Fig.4

Fig.3

Fig.5

Fig.6

| EINSCHLÄGIGE DOKUMENTE | | | KLASSIFIKATION DER ANMELDUNG (Int.Cl.³) |
|---|---|---|---|
| Kategorie | Kennzeichnung des Dokuments mit Angabe, soweit erforderlich, der maßgeblichen Teile | betrifft Anspruch | F 16 B 5/06 |
| X | <u>DE - A - 2 032 572</u> (BAUER)<br><br>* Seite 2, Zeilen 2-9; Seite 3, Zeilen 10-17; Figuren 1-4 *<br><br>-- | 1,2,3, 6 | |
| X | <u>DE - C - 883 116</u> (ZANKL)<br><br>* Seite 2, Figuren *<br><br>-- | 1,2,3 | |
| | <u>DE - A - 2 616 190</u> (TECNOGIOCAT-TOLI)<br><br>* Seite 9, Zeilen 16-22; Figuren 2-4 *<br><br>-- | 1,2,3 | **RECHERCHIERTE SACHGEBIETE (Int. Cl.³)**<br><br>A 63 H 33/10<br>A 63 H 33/08<br>A 63 H 33/06<br>F 16 B 2/24<br>F 16 B 2/22<br>F 16 B 5/06 |
| | <u>DE - A - 2 325 768</u> (MAERKLIN)<br><br>* Seite 2, Zeilen 13-16 *<br><br>---- | 4 | |

Der vorliegende Recherchenbericht wurde für alle Patentansprüche erstellt.

| Recherchenort | Abschlußdatum der Recherche | Prüfer |
|---|---|---|
| Den Haag | 10-11-1978 | FLORES |

EPA form 1503.1 06.78